# EUROPÄISCHE PATENTSCHRIFT

(11) **EP 0 367 148 B1**
(45) Veröffentlichungstag und Bekanntmachung des Hinweises auf die Patenterteilung: **16.03.1994**
(21) Anmeldenummer: 89120017.2
(22) Anmeldetag: 27.10.1989
(51) Int. Cl.: B01D 53/34, B01J 20/04

(54) **Mittel und Verfahren zur Reinigung von Gasen und Abgasen von Schwermetallen und ein Verfahren zur Herstellung dieser Mittel**
Agents and method for purifying gases and waste gases from heavy metals, and method of producing these agents
Agents et méthode pour purifier des gaz et des gaz d'échappement des métaux lourds et procédé de préparation de ces agents

(30) Priorität: 28.10.1988 DE 3836756; 18.11.1988 DE 3838987
(43) Veröffentlichungstag der Anmeldung: 09.05.1990
(73) Patentinhaber: FTU GmbH Forschung und technische Entwicklung im Umweltschutz, D-82319 Starnberg (DE)
(72) Erfinder: Suchenwirth, Hermann, Dr. Dipl. Chem., D-8082 Grafrath (DE)
(74) Vertreter: Huber, Bernhard, Dipl.-Chem.

(56) Entgegenhaltungen:
- EP-A- 0 107 582
- EP-A- 0 137 599
- EP-A- 0 289 810
- EP-A- 0 292 083
- DE-A- 2 330 854
- DE-A- 2 728 692
- DE-A- 3 018 319
- DE-A- 3 400 764
- DE-A- 3 439 059
- DE-A- 3 510 669
- DE-A- 3 620 024
- DE-A- 3 702 306
- FR-A- 2 529 802
- GB-A- 2 134 093
- US-A- 2 423 689
- US-A- 4 101 631
- US-A- 4 206 183
- US-A- 4 372 927

## Beschreibung

Die Erfindung betrifft Mittel zur Reinigung von Gasen und Abgasen von Säuren und Schwermetallen, ein Verfahren zur Herstellung dieser Mittel sowie ein Verfahren zur Reinigung von Gasen und Abgasen von Schwermetallen und Säuren.

Bei thermischen Prozessen, z.B. Hüttenprozessen, Kohlefeuerungen und Abfallverbrennungen, werden Abgase erzeugt, die mit flüchtigen Schwermetallen, z.B. Cadmium, Quecksilber, Thallium, Arsen, Antimon und Blei belastet sind. Es handelt sich dabei um elementare Schwermetalle oder Salze, insbesondere Chloride und Oxide.

Üblicherweise werden die Gase abgekühlt und die Schwermetalle naß ausgewaschen. Häufig ist dies nicht ausreichend, wenn die Schwermetalle in elementarer Form vorliegen. Quecksilber z.B. wird vielfach als Element emittiert. Es läßt sich dann auch über eine Naßwäsche nicht aus dem Gas abtrennen. Hinzu kommt noch das Problem, daß flüchtige Schwermetalle auch nach der Naßwäsche als Aerosole und/oder schwerabscheidbarer Feinststaub emittiert werden.

Ein weiteres Verfahren des Stands der Technik arbeitet mit Suspensionen von Schwefel oder Schwefelverbindungen bzw. mit wäßrigen Lösungen von Thioverbindungen, z.B. Thioharnstoff. Die Lösungen bzw. Suspensionen werden in den Gasstrom eingedüst und die gebildeten Verbindungen aus Quecksilber und Schwefel an Elektrofiltern abgeschieden.

Die Quecksilberabscheidung ist jedoch mit 70 % zu gering, um die Einhaltung des Grenzwertes von 0,2 mg/m³ zu gewährleisten. Die nicht ausreichende Hg-Abscheidung dürfte unter anderem auch auf die Zugabe von Wasser in den Gasstrom und den erheblichen Gehalt an starken Säuren im Gasstrom zurückzuführen sein, wenn Abgase aus Müllverbrennungsanlagen behandelt werden.

Daneben sind auch eine Reihe von Verfahren bekannt, bei denen eine trockene Abscheidung von Quecksilber aus Abgasen erfolgt.

Eine Methode besteht darin, Abgasströme über Aktivkohle-Filter zu leiten. Dies führt zu einer Verminderung des Gehaltes an flüchtigen Schwermetallen, z.B. von Quecksilber, doch ist dieses Verfahren mit erheblichen Kosten und Gefahren belastet, da große Mengen hochaktiver Kohle eingesetzt werden müssen und immer die Gefahr von Schwelbränden im Kohlebett besteht. Über den stets vorhandenen Abrieb wird außerdem schwermetallhaltiger Feinstaub emittiert, der schwierig abzuscheiden ist.

Es hat deshalb nicht an Versuchen gefehlt, die flüchtigen Schwermetalle mit Schwefel oder Sulfiden in schwerflüchtige Sulfide umzusetzen und aus dem Gasstrom abzuscheiden.

Ein bekanntes Verfahren besteht darin, Schwefel auf Aktivkohle aufzubringen und den Gasstrom darüber zu leiten. Die Quecksilberabscheidung ist zwar recht wirksam, doch bleiben die Probleme der Selbstentzündung und der Emission von Abrieb bestehen.

Weiterhin ist schon vorgeschlagen worden, Schwefel oder wasserunlösliche Schwefelverbindungen, z.B. ZnS, zusammen mit Ca(OH)₂-Pulver in den Abgasstrom von Müllverbrennungsanlagen einzudüsen und Quecksilber abzuscheiden. Obwohl 1 g/m³ ZnS bei 200 bis 250°C eingesetzt wurde, war die Hg-Abscheidung mit 60 % zu niedrig, um einen Hg-Grenzwert von 0,2 mg/m³ gewährleisten zu können.

Aus der DE-A-3702306 ist ein Verfahren zur Abtrennung von Schwermetallen aus Abgasen von Feuerungsanlagen bekannt, bei welchem dem Abgas schwermetallbindende Substanzen zugesetzt und die gebildeten, schwerflüchtigen Schwermetallverbindungen an Staubabscheidevorrichtungen abgeschieden werden. Die in dieser Druckschrift beispielhaft als schwermetallbindende Substanz genannte Verbindung Trimercapto-s-triazin zersetzt sich aber im Abgas nicht in der Weise, daß im Reaktionsraum elementarer Schwefel entsteht.

Die EP-A-0292083 beschreibt ein Verfahren zur Herstellung reaktionsfähiger Calciumhydroxide für die Gas- und Abgasreinigung, bei dem das Calciumhydroxid unter anderem mit quecksilberbindenden Stoffen wie Schwefelwasserstoff, Natriumhydrogensulfid, Natriumsulfid oder Trimercapto-s-triazin beaufschlagt wird. Auch diese genannten schwefelhaltigen Verbindungen zersetzen sich nicht unter Bildung von elementarem Schwefel.

In der WO 88/09203 werden oberflächenaktive Substanzen, gemischt mit Calciumhydroxid, beschrieben, wobei die oberflächenaktiven Substanzen noch schadstoffbindende Substanzen, wie Natriumsulfid, Mercaptane oder Trimercapto-s-triazin enthalten können. Die angegebenen, schwefelhaltigen Verbindungen sind allerdings nicht in der Lage, im Abgas elementaren Schwefel abzugeben.

Aus der DE-A-2948305 ist ein Verfahren zur trockenen Reinigung von quecksilberhaltigen Gasen und Abgasen thermischer Prozesse bekannt, bei dem die Gase mit Metallen und/oder Legierungen behandelt werden, die mit dem Quecksilber Amalgamen bilden. Zusätzlich können zusammen mit den amalgambildenden Metallen oder Legierungen auch noch basische Stoffe zur Bindung saurer Schadstoffe in den Abgasstrom eingebracht werden.

Die DE-A-2330854 betrifft die Entfernung von Quecksilberdämpfen aus gasförmiger Phase mittels eines auf einer Kieselsäure und/oder Tonerdeträger aufgebrachten, wasserunlöslichen, mit Quecksilber reagierenden Metallsulfids.

In der FR-A-2529802 wird eine Absorptionsmasse zur Entfernung von Quecksilber aus einem Gas beschrieben. Als geeignete Absorptionsmasse werden anorganische Verbindungen wie Aluminiumoxid, Siliciumoxid und Zement genannt.

Aus der DE-A-2728692 ist ein Verfahren zur Entfernung von quecksilberhaltigen Verunreinigungen in Gasen bekannt. Die Entfernung erfolgt mittels Hindurchleiten der Gase durch ein Filterbett, welches einen Absorber aufweist, der von einem Träger und einem oder mehreren Absorptionsmitteln aus natürlichen Sulfidmineralien, synthetischen Metallsulfiden und/oder Schwefel gebildet wird.

Das in der US-A-4101631 beschriebene Verfahren betrifft die selektive Adsorption von Quecksilber aus Gasströmen mittels auf Molekularsieben aufgetragenem, elementarem Schwefel.

In der US-A-4206183 ist ein Verfahren zur Entfernung von quecksilberhaltigen Verunreinigungen aus Gasen beschrieben. Bei diesem Verfahren werden Mittel verwendet, bei denen Sulfide oder Schwefel auf Träger wie Bimsstein aufgetragen worden sind. Das im Gas befindliche Quecksilber wird in unlösliches Quecksilber überführt.

Die DE-A-3439059 schließlich betrifft ein Absorptionsmittel für die trockene Entfernung von Schwefeldioxid aus Rauchgasen. Zur Steigerung des Wirkungsgrades der Abscheidung von Schwefeldioxid werden Mangancarbonat oder Manganoxid feinkörnigen, anorganischen Erdalkaliverbindungen zugesetzt.

Alle vorgenannten Mittel und Verfahren weisen den Nachteil auf, daß damit keine zuverlässige Abscheidung von Quecksilber aus Abgasströmen möglich ist.

Der vorliegenden Erfindung liegt demnach die Aufgabe zugrunde, aus Gasströmen, vornehmlich von Abfallverbrennungsanlagen, flüchtige Schwermetalle, insbesondere Quecksilber, in ihren verschiedenen Verbindungsformen und auch in elementarer Form, gezielt und ohne Abkühlungsvorgänge möglichst quantitativ abzuscheiden. Weiterhin soll ein einfaches und kostengünstiges Verfahren zur gemeinsamen Abscheidung von flüchtigen Schwermetallen und sauren Bestandteilen aus Gasströmen angegeben werden. Dabei muß die Verminderung des Schwermetallgehaltes im Abgasstrom so hoch sein, daß die bestehenden Grenzwerte, z.B. für Hg, Cd, Tl und As, sicher eingehalten werden können.

Die Erfindung löst diese Aufgabe durch ein Mittel zur Reinigung von Gasen und Abgasen von Säuren und Schwermetallen nach dem unabhängigen Patentanspruch 1. Bevorzugte Weiterbildungen des Mittels sind in den Ansprüchen 2 bis 10 beschrieben.

Die Erfindung schafft des weiteren ein Verfahren zur Herstellung von trockenen oder wasserhaltigen Pulvern auf der Basis von Calciumhydroxid und schwefelhaltigen, schwermetallbildenden Substanzen oder schwefelhaltigen, schwermetallbindenden Substanzen und oberflächenaktiven Substanzen für die Gas- und Abgasreinigung nach dem unabhängigen Patentanspruch 11. Eine bevorzugte Weiterbildung dieses Verfahrens ist im abhängigen Anspruch 12 beschrieben.

Gemäß einem weiteren Aspekt der Erfindung werden Verfahren zur Reinigung von Gasen und Abgasen von Schwermetallen und Säuren nach den unabhängigen Patentansprüchen 13 und 17 angegeben. Bevorzugte Ausgestaltungen des Verfahrens nach Anspruch 13 sind in den abhängigen Ansprüchen 14 bis 16 beschrieben.

Erfindungsgemäß erfolgt die Lösung eines Aspekts der gestellten Aufgabe in zwei Stufen dahingehend, daß in einer 1. Stufe Calciumhydroxide hergestellt werden, die wasserlösliche, schwefelhaltige Substanzen enthalten, die mit den im Abgas vorhandenen Säuren unter Abgabe von Schwefel reagieren, welche in einer 2. Stufe in einem trockenen oder quasitrockenen Verfahren zur Einwirkung auf die flüchtigen, d.h. dampfförmigen, Schwermetalle des Abgases gebracht und wieder aus dem Abgasstrom abgeschieden werden.

Ein wesentlicher Vorteil der wasserlöslichen, schwefelhaltigen Substanzen, die mit den im Abgas vorhandenen Säuren unter Abgabe von Schwefel reagieren, besteht darin, daß sie in Wasser gelöst während des Löschprozesses oder nach dem Löschen feinstverteilt auf das Calciumhydroxid aufgebracht werden können. Auch das Aufbringen auf oberflächenaktive Substanzen wird sehr erleichtert. Die Feinstverteilung begünstigt die Reaktionen mit den Schwermetallen erheblich.

Hinzu kommt, daß sich auf Calciumhydroxid und auf den oberflächenaktiven Substanzen Wasserfilme bilden, welche die schwefelhaltigen Substanzen anteilig auflösen. Schwermetalle, die als Salze flüchtig sind, lösen sich in dem Wasserfilm und reagieren schnell mit dem von den wasserlöslichen, schwefelhaltigen Verbindungen abgegebenen Schwefel.

Die Abscheidung der flüchtigen Schwermetalle wird durch diese Mechanismen sehr erleichtert.

Erfindungsgemäß werden als wasserlösliche, schwefelhaltige Substanzen, die unter Einwirkung von Säure Schwefel abgeben insbesondere Thiosulfate und Polysulfide eingesetzt. Besonders bevorzugt sind die Alkali- und Erdalkaliverbindungen der Thiosulfate und Polysulfide.

Der aus den vorgenannten Substanzen freigesetzte Schwefel wird in feinstverteilter Form gebildet und ist zur Bindung von flüchtigen Schwermetallen der verschiedensten Formen sehr geeignet. Da die Abgasströme aus Abfallverbrennungsanlagen und auch aus anderen Verbrennungssystemen immer Säuren enthalten, ist die Freisetzung von Schwefel aus den Substanzen gewährleistet.

Als unter sauren Reaktionsbedingungen schwefelabgebende Stoffgruppe sind auch die Polysulfide der allgemeinen Formel M₂Sₙ geeignet, worin n die Werte 2, 3, 4, 5 und höher annehmen kann und M Metalle symbolisiert. Diese Polysulfide scheiden bei der Einwirkung von Säuren Schwefel ab, der zusammen mit dem ebenfalls freigesetzten Schwefelwasserstoff in sehr aktiver Form auf die flüchtigen Schwermetalle einwirkt.

Als schwefelabgebende Verbindungen sind auch die Salze von Polythionsäuren verwendbar. Die Salze von Polythionsäuren zersetzen sich unter der Einwirkung von Säuren in Schwefel, schweflige Säure und Schwefelsäure. Der freiwerdende Schwefel ist ebenfalls zur Bindung von flüchtigen Schwermetallen in Gas- und Abgasströmen bestens geeignet.

Eine bevorzugte Ausführung des erfindungsgemäßen Verfahrens zur Reinigung von Gasen und Abgasen von flüchtigen Schwermetallen besteht nun darin, wasserlösliche, schwefelhaltige Substanzen, die mit den im Abgas vorhandenen Säuren unter Abgabe von Schwefel reagieren, zusammen mit Calciumhydroxid entweder auf Calciumhydroxid aufzutragen oder mit Calciumhydroxid gemischt zum Einsatz zu bringen.

Die erfindungsgemäße Herstellung von trockenen oder wasserhaltigen Pulvern auf der Basis von Calciumhydroxid für die Reinigung von Gasen und Abgasen von Schwermetallen erfolgt dadurch, daß vor dem Löschen von Branntkalk dem Branntkalk und/oder während des Löschens dem Löschwasser und/oder nach dem Löschen dem Calciumhydroxid wasserlösliche, schwefelhaltige Substanzen, die mit den im Abgas vorhandenen Säuren unter Abgabe von Schwefel reagieren, oder oberflächenaktive Substanzen und wasserlösliche, schwefelhaltige Substanzen zugesetzt werden.

Die Kombination von wasserlöslichen, schwefelhaltigen Verbindungen mit Calciumhydroxid geschieht bevorzugt dadurch, daß die schwefelhaltigen Verbindungen dem zum Löschen erforderlichen Wasser zugesetzt werden.

Eine Ausführungsform besteht z.B. darin, daß Thiosulfate im Löschwasser gelöst und diese Lösung zum Löschen von Branntkalk eingesetzt wird. Das Thiosulfat verteilt sich hierbei in feinster Form und gleichmäßig über das Calciumhydroxid und liegt deshalb in besonders reaktiver Form zur weiteren Umsetzung bereit.

Hierbei kann der Löschprozeß auch so ausgeführt werden, daß zuerst mit reinem Wasser teilgelöscht und dann die vollständige Löschung mit Wasser erfolgt, das die wasserlöslichen, schwefelhaltigen Substanzen, die mit den im Abgas vorhandenen Säuren unter Abgabe von Schwefel reagieren, enthält.

Es ist jedoch auch möglich, die angeführten schwefelhaltigen Verbindungen entweder in fester Form als feinste Pulver oder auch in gelöster, konzentrierter Form auf Calciumhydroxid aufzubringen.

Erfolgt eine nachträgliche Aufbringung auf Calciumhydroxid über Lösungen, dann fällt ein Calciumhydroxidpulver an, das bis zu 3 Gew.-%, gelegentlich bis zu 5 Gew.-%, Wasser enthalten kann.

Eine andere Möglichkeit der Kombination der wasserlöslichen, schwefelhaltigen Verbindungen, die unter Einwirkung der im Abgas vorhandenen Säuren Schwefel abgeben, und Calciumhydroxid besteht darin, daß diese Verbindungen dem Branntkalk zugegeben werden und der Branntkalk anschließend gelöscht wird. In all diesen Fällen liegen die wasserlöslichen, schwefelhaltigen Verbindungen in feinster Form verteilt in Calciumhydroxid vor. Ein wesentlicher Vorteil dieses Herstellungsverfahrens liegt darin, daß Branntkalk und die wasserlöslichen, schwefelhaltigen Verbindungen intensiv vorgemischt werden, z.B. im Kalkwerk, und dann das Gemisch erst beim Anwender gelöscht wird. Damit entfallen Zusatzeinrichtungen beim Anwender.

Diese Herstellungsverfahren können so gesteuert werden, daß die in den Ansprüchen 1 bis 10 angeführten und näher spezifizierten Mittel auf der Basis von Calciumhydroxid anfallen.

Besonders günstig einzusetzen sind Mittel, die einen Gehalt an wasserlöslichen, schwefelhaltigen Substanzen, die mit den im Abgas vorhandenen Säuren unter Abgabe von Schwefel reagieren, im Bereich von 0,01 bis 5 Gew.-%, vorzugsweise 0,1 bis 1 Gew.-%, insbesondere 0,2 bis 0,6 Gew.-%, aufweisen.

Entsprechend der Belastung der Abgase mit flüchtigen Schwermetallen können hochdotierte Calciumhydroxide oder im laufenden Betrieb nach Regelung wechselnde Mengen verschieden dotierter Mittel auf Calciumhydroxidbasis eingesetzt werden.

Weiterhin können erfindungsgemäß Mittel hergestellt und eingesetzt werden, die neben den Gehalten an wasserlöslichen, schwefelhaltigen Substanzen, die mit den im Abgas vorhandenen Säuren unter Abgabe von Schwefel reagieren, noch 0,5 bis 10 Gew.-% oberflächenaktive Substanzen aufweisen.

Als oberflächenaktive Substanzen kommen insbesondere Aktivkohle, Herdofen-Braunkohlenkoks, Kieselgel, Kieselgur und/oder aktiviertes Aluminiumoxid in Frage.

Die wasserlöslichen, schwefelhaltigen Substanzen, die mit den im Abgas vorhandenen Säuren unter Abgabe von Schwefel reagieren, können über wäßrige Lösungen auf die oberflächenaktiven Substanzen aufgetragen werden oder mit diesen mechanisch gemischt werden.

Das Aufbringen auf die oberflächenaktiven Substanzen erfolgt am besten in einer eigenen Behandlungsstufe, kann jedoch mit gutem Erfolg auch während des Löschprozesses bewerkstelligt werden.

Das kann dadurch geschehen, daß die wasserlöslichen, schwefelhaltigen Substanzen und die oberflächenaktiven Substanzen mit Branntkalk gemischt und dieser dann gelöscht wird. Es ist jedoch auch möglich, Branntkalk mit den oberflächenaktiven Substanzen zu mischen und dann mit Wasser zu löschen, das die wasserlöslichen, schwefelhaltigen Substanzen enthält.

So lassen sich z.B. auf Herdofen-Braunkohlenkoks wasserlösliche Polysulfide, Thiosulfate und Polythionsäuren gut auftragen und durch Verdampfen des Wassers in trockener Form herstellen.

Oberflächenaktive Stoffe sind zur Abscheidung von flüchtigen Schwermetallen sehr geeignet. Sie sind in den meisten Fällen für sich allein schon schwermetallbindend, doch wird diese Wirkung durch die Anwesenheit von wasserlöslichen, schwefelhaltigen Verbindungen, die mit den im Abgas vorhandenen Säuren unter Abgabe von Schwefel reagieren, noch erheblich verbessert.

Eine andere Form der Kombination von oberflächenaktiven Stoffen und wasserlöslichen, schwefelhaltigen Substanzen, die mit den im Abgas vorhandenen Säuren unter Abgabe von Schwefel reagieren, besteht darin, daß letztere in feinstverteilter Form mit den festen oberflächenaktiven Stoffen durch Mahlen oder auch Vermischen verbunden sind.

Eine Ausführungsform des erfindungsgemäßen Verfahrens zur Reinigung von säurehaltigen Gasen und Abgasen besteht darin, daß die Gas- bzw. Abgasströme mit den angegebenen Mitteln im Temperaturbereich von 0 bis 400°C, vorzugsweise 20 bis 300°C, insbesondere 80 bis 250°C, behandelt werden.

Bei Temperaturen oberhalb 400°C besteht die Gefahr der raschen Verbrennung der schwefelhaltigen Verbindungen. Das Hauptanwendungsgebiet liegt im Temperaturbereich von 20 bis etwa 300°C. Mit 200 bis 250°C kommen die meisten Abgase aus Verbrennungsanlagen nach dem Kessel in die Reinigungsanlagen. Es ist deshalb von besonderem Interesse, die flüchtigen Schwermetalle aus den heißen Abgasen bei 200 bis 250°C abzuscheiden. Hierzu eignen sich insbesondere die Thiosulfate, die Polysulfide und die Salze von Polythionsäuren. Ganz besonders geeignet sind die Thiosulfate, da sie temperaturstabil sind und bei hohen Temperaturen rasch mit den flüchtigen Schwermetallen zu reagieren vermögen.

Das Verhältnis der erfindungsgemäß eingesetzten Schwefelverbindungen zu den abzuscheidenden Schwermetallen ist dadurch gekennzeichnet, daß die in äußerst geringen Mengen vorliegenden Schwermetalle ohne besondere wirtschaftliche Kosten mit deutlichem Überschuß an schwefelhaltigen Verbindungen behandelt werden können.

Erfindungsgemäß ist es angebracht, die schwefelhaltigen Substanzen, die mit den im Abgas vorhandenen Säuren unter Abgabe von Schwefel reagieren, insbesondere Natriumthiosulfat, in Bezug auf Quecksilber in 1- bis 1000-facher Menge, vorzugsweise 25- bis 500-facher Menge, einzusetzen. Menge bedeutet, daß auf eine Gewichtseinheit Quecksilber bei 1-facher Menge die gleiche Gewichtseinheit schwefelhaltiger Substanz gesetzt wird.

Der bevorzugte Anwendungsbereich liegt bei 25- bis 500-facher Menge. Mit einer derartigen Stöchiometrie lassen sich sicher die flüchtigen Schwermetalle abscheiden, ohne daß das Verfahren unwirtschaftlich wird.

Der Vorteil von Schwefel abgebenden Verbindungen, wie Thiosulfaten, liegt darin, daß der Schwefel in feinst verteilter Form bei der Zersetzung unter Einwirkung von Säuren auftritt.

Der wesentliche Vorteil des erfindungsgemäßen Verfahrens ist darin zu sehen, daß die zur Bindung der flüchtigen Schwermetalle der Abgase eingesetzten wasserlöslichen, schwefelhaltigen Substanzen, die mit den im Abgas vorhandenen Säuren unter Abgabe von Schwefel reagieren, mit erheblichen Mengen Ca(OH)₂-Pulver als Träger in den Gasstrom eingebracht werden können. Dies bedeutet eine sichere Verteilung der schwefelhaltigen Substanzen im Gasstrom. Außerdem liegt bei Verwendung eines Gewebefilters eine Reaktionsschicht vor, die das zu reinigende Abgas passieren muß.

Ca(OH)₂ hat demnach nicht nur die Funktion eines Säurebinders, sondern auch die Aufgabe, den schwefelhaltigen Substanzen Reaktionsflächen und Reaktionsmöglichkeiten zu schaffen.

Weiterhin hat Ca(OH)₂ die Aufgabe, aus dem gebildeten Schwefel oder den schwefelhaltigen Substanzen entstehende Oxidationsprodukte, z.B. SO₂ oder SO₃, neutralisierend abzufangen. Es können daher schwefelhaltige Substanzen in hohem Überschuß zu den flüchtigen Schwermetallen eingesetzt werden, da keine Emission von SO₂ und SO₃ zu erwarten ist. Eine Abscheidung der flüchtigen Schwermetalle bis 100 % ist erreichbar.

Selbst bei den hohen Reaktionstemperaturen von 200°C werden die flüchtigen Schwermetalle mit Abscheidegraden von mehr als 70 % abgeschieden.

Die aus den Schwefelverbindungen und den flüchtigen Schwermetallen gebildeten Reaktionsprodukte können an herkömmlichen Filtern, vorzugsweise Gewebefiltern oder elektrostatische Filtern, in Zyklonen oder auch über die Naßwäsche abgeschieden werden.

Das Verfahren ist zur Behandlung von Gasen und Abgasen aus Produktionsprozessen, z.B. Hüttenprozessen, Chloralkalielektrolyse, Hochofenprozessen und von Abgasen aus Kraftwerken, Abfallverbrennungs- und Sondermüllverbrennungsanlagen, Anlagen der Glas- und Keramikindustrie, Feuerungsanlagen, Aluminium-Schmelzwerken und Verbrennungsanlagen geeignet.

Eingesetzt werden kann es für die Trockensorption und Trockensorption mit Wasserkonditionierung.

Die Erfindung wird nachfolgend anhand eines Beispiels erläutert:

### Beispiel:

In 17 ml Wasser wurden 111 mg Natriumthiosulfat gelöst. Damit wurden 28 g Branntkalk gelöscht. Das trocken anfallende Calciumhydroxid wurde zur Abgasreinigung eingesetzt.

Über 265 mg dieses Produktes wurden bei 192°C 10,5 l eines Abgases folgender Zusammensetzung geleitet:

| | |
|---|---|
| - Stickstoff | 80 Vol.-% |
| - Sauerstoff | 20 Vol.-% |
| - Feuchte | 289 mg/1 |
| - HCl | 12,1 mg/1 |
| - HgCl | 0,7 µg/1 |

Von insgesamt 7,4 µg HgCl wurden 5,7 µg abgeschieden. Dies bedeutet einen Abscheidegrad von 76,8 %

## Patentansprüche

1. Mittel zur Reinigung von Gasen und Abgasen von Säuren und Schwermetallen, dadurch gekennzeichnet, daß es aus einem trockenen Pulver auf der Basis von reaktionsfähigem Calciumhydroxid und wasserlöslichen, schwefelhaltigen Substanzen besteht, die mit den im Abgas vorhandenen Säuren unter Abgabe von Schwefel reagieren.

2. Mittel nach Anspruch 1, dadurch gekennzeichnet, daß das Calciumhydroxid einen Gehalt von 0,01 bis 5 Gew.-%, vorzugsweise 0,1 bis 1 Gew.-%, insbesondere 0,2 bis 0,6 Gew.-%, an wasserlöslichen, schwefelhaltigen Substanzen, die mit den im Abgas vorhandenen Säuren unter Abgabe von Schwefel reagieren, aufweist.

3. Mittel nach Anspruch 1 oder 2, gekennzeichnet durch eine Korngröße von < 200 µm.

4. Mittel nach einem der vorhergehenden Ansprüche, dadurch gekennzeichnet, daß das trockene Pulver auf der Basis von reaktionsfähigem Calciumhydroxid zusätzlich oberflächenaktive Substanzen enthält.

5. Mittel nach Anspruch 4, dadurch gekennzeichnet, daß das Calciumhydroxid 0,5 bis 10 Gew.-% oberflächenaktive Substanzen enthält.

6. Mittel nach Anspruch 4 oder 5, dadurch gekennzeichnet, daß die wasserlöslichen, schwefelhaltigen Substanzen, die mit den im Abgas vorhandenen Säuren unter Abgabe von Schwefel reagieren, auf den oberflächenaktiven Substanzen aufgetragen sind.

7. Mittel nach Anspruch 4 oder 5, dadurch gekennzeichnet, daß die wasserlöslichen, schwefelhaltigen Substanzen, die mit den im Abgas vorhandenen Säuren unter Abgabe von Schwefel reagieren, mit den oberflächenaktiven Substanzen gemischt sind.

8. Mittel nach einem der vorstehenden Ansprüche, dadurch gekennzeichnet, daß die wasserlöslichen, schwefelhaltigen Substanzen, die mit den im Abgas vorhandenen Säuren unter Abgabe von Schwefel reagieren, ausgewählt sind aus der Gruppe der Polysulfide, Polythionate und Thiosulfate, insbesondere in Form der Alkali- und Erdalkaliverbindungen.

9. Mittel nach einem der vorhergehenden Ansprüche, gekennzeichnet durch einen Wassergehalt von 1 bis 5 Gew.-%, vorzugsweise von 0,5 bis 3 Gew.-%.

10. Mittel nach einem der Ansprüche 4 bis 9, dadurch gekennzeichnet, daß die oberflächenaktiven Substanzen ausgewählt sind aus der Gruppe Aktivkohle, Braunkohlen-Herdofen-Koks, aktiviertes Aluminiumoxid, Kieselgel und/oder Kieselgur.

11. Verfahren zur Herstellung von trockenen oder wasserhaltigen Pulvern auf der Basis von Calciumhydroxid und schwefelhaltiger, schwermetallbindender Substanzen oder schwefelhaltiger, schwermetallbindender Substanzen und oberflächenaktiver Substanzen für die Reinigung von Gasen und Abgasen von Schwermetallen und Säuren nach einem der vorstehenden Ansprüche, dadurch gekennzeichnet, daß vor dem Löschen von Branntkalk dem Branntkalk und/oder während des Löschens dem Löschwasser und/oder nach dem Löschen dem Calciumhydroxid wasserlösliche, schwefelhaltige Substanzen, die mit den im Abgas vorhandenen Säuren unter Abgabe von Schwefel reagieren, oder oberflächenaktive Substanzen und wasserlösliche, schwefelhaltige Substanzen, die mit den im Abgas vorhandenen Säuren unter Abgabe von Schwefel reagieren, zugesetzt werden.

12. Verfahren nach Anspruch 11, dadurch gekennzeichnet, daß die wasserlöslichen, schwefelhaltigen Substanzen, die mit den im Abgas vorhandenen Säuren unter Abgabe von Schwefel reagieren, in Wasser gelöst auf Calciumhydroxid aufgetragen werden.

13. Verfahren zur Reinigung von Gasen und Abgasen von Schwermetallen und Säuren mit Calciumhydroxid und schwefelhaltigen Substanzen oder Calciumhydroxid, schwefelhaltigen Substanzen und oberflächenaktiven Substanzen, dadurch gekennzeichnet, daß dem Gas- bzw. Abgasstrom feinpulvriges, trockenes Calciumhydroxid oder feinpulvriges Calciumhydroxid mit einem Wassergehalt von 0,1 bis 5 Gew.-%, vorzugsweise 0,5 bis 3 Gew.-%, mit einem Gehalt an wasserlöslichen, schwefelhaltigen Substanzen, die mit den im Abgas vorhandenen Säuren unter Abgabe von Schwefel reagieren oder Calciumhydroxid mit oberflächenaktiven Substanzen, auf die wasserlösliche, schwefelhaltige Substanzen aufgetragen sind, die mit den im Abgas vorhandenen Säuren unter Abgabe von Schwefel reagieren, zugesetzt werden, und die sulfidierten Schwermetalle und die Reaktionsprodukte aus Säuren und Ca(OH)₂ aus den Gas- und Abgasströmen an geeigneten Abscheidevorrichtungen, vorzugsweise an Gewebefiltern, abgeschieden werden.

14. Verfahren nach Anspruch 13, dadurch gekennzeichnet, daß die in den Ansprüchen 1 bis 10 beanspruchten Mittel eingesetzt werden.

15. Verfahren nach einem der Ansprüche 13 und 14, dadurch gekennzeichnet, daß die Gas- bzw. Abgasströme mit schwefelhaltigen Substanzen, die mit den im Abgas vorhandenen Säuren unter Abgabe von Schwefel reagieren, im Temperaturbereich von 0° bis 400°C, vorzugsweise 20° bis 300°C, insbesondere 80° bis 250°C, behandelt werden.

16. Verfahren nach einem der Ansprüche 13 bis 15, dadurch gekennzeichnet, daß die schwefelhaltigen Substanzen, die mit den im Abgas vorhandenen Säuren unter Abgabe von Schwefel reagieren, insbesondere Natriumthiosulfat, im Verhältnis zu den flüchtigen Schwermetallen, vorzugsweise Quecksilber, in 1 bis 1000-facher Menge, vorzugsweise 25 bis 500-facher Menge, eingesetzt werden.

17. Verfahren zur Reinigung von säurehaltigen Gasen und Abgasen von den in ihnen enthaltenen flüchtigen Schwermetallen, dadurch gekennzeichnet, daß die wasserlöslichen, schwefelhaltigen Substanzen, die mit den im Abgas vorhandenen Säuren unter Abgabe von Schwefel reagieren, in den Temperaturbereichen nach Anspruch 15 und mit den stöchiometrischen Verhältnissen nach den Ansprüchen 16 eingesetzt werden.

## Claims

1. An agent for purifying gases and waste gases from acids and heavy metals, **characterized in that** it consists of a dry powder based on reactive calcium hydroxide and water-soluble, sulphur-containing substances reacting with the acids present in the waste gas to give off sulphur.

2. An agent according to Claim 1, **characterized in that** the calcium hydroxide has a content of from 0·01 to 5% by weight, preferably 0·1 to 1% by weight, in particular 0·2 to 0·6% by weight of water-soluble, sulphur-containing substances reacting with the acids present in the waste gas to give off sulphur.

3. An agent according to Claim 1 or 2, **characterized by** a grain size of < 200 µm.

4. An agent according to one of the preceding Claims, **characterized in that** the dry powder based on reactive calcium hydroxide additionally contains surface-active substances.

5. An agent according to Claim 4, **characterized in that** the calcium hydroxide contains from 0·5 to 10% by weight of surface-active substances.

6. An agent according to Claim 4 or 5, **characterized in that** the water-soluble, sulphur-containing substances reacting with the acids present in the waste gas to give off sulphur are applied to the surface-active substances.

7. An agent according to Claim 4 or 5, **characterized in that** the water-soluble, sulphur-containing substances reacting with the acids present in the waste gas to give off sulphur are mixed with the surface-active substances.

8. An agent according to one of the preceding Claims, **characterized in that** the water-soluble, sulphur-containing substances reacting with the acids present in the waste gas to give off sulphur are selected from the group of polysulphides, polythionates and thiosulphates, in particular in the form of alkaline and alkaline-earth compounds.

9. An agent according to one of the preceding Claims, **characterized by** a water content of from 1 to 5% by weight, preferably from 0·5 to 3% by weight.

10. An agent according to one of Claims 4 to 9, **characterized in that** the surface-active substances are selected from the group of active carbon, lignite-open-hearth coke, activated aluminium oxide, silica gel and/or diatomaceous earth.

11. A process for preparing dry or water-containing powders based on calcium hydroxide and sulphur-containing heavy-metal-bonding substances or sulphur-containing heavy-metal-bonding substances and surface-active substances for purifying gases and waste gases from heavy metals and acids according to one of the preceding Claims, **characterized in that** water-soluble, sulphur-containing substances reacting with the acids present in the waste gas to give off sulphur, or surface-active substances and water-soluble, sulphur-containing substances reacting with the acids present in the waste gas to give off sulphur are added to the unhydrated lime before slaking the unhydrated lime and/or to the slaking water during the slaking and/or to the calcium hydroxide after the slaking.

12. A process according to Claim 11, **characterized in that** the water-soluble, sulphur-containing substances reacting with the acids present in the waste gas to give off sulphur are applied, dissolved in water, to calcium hydroxide.

13. A process for purifying gases and waste gases from heavy metals and acids with calcium hydroxide and sulphur-containing substances or calcium hydroxide, sulphur-containing substances and surface-active substances, **characterized in that** finely powdered, dry calcium hydroxide or finely powdered calcium hydroxide with a water content of from 0·1 to 0·5 by weight, preferably from 0·5 to 3% by weight, with a content of water-soluble, sulphur-containing substances reacting with the acids present in the waste gas to give off sulphur, or calcium hydroxide with surface-active substances onto which water-soluble, sulphur-containing substances reacting with the acids present in the waste gas to give off sulphur are applied are added to the gas or waste-gas flow, and the sulphidized heavy metals and the reaction products from acids and Ca(OH)₂ from the gas or waste-gas flows are precipitated on suitable separation devices, preferably on fabric filters.

14. A process according to Claim 13, **characterized in that** the agents claimed in Claims 1 to 10 are introduced.

15. A process according to one of Claims 13 ad 14, **characterized in that** the gas or waste-gas flows are treated with sulphur-containing substances reacting with the acids present in the waste gas to give off sulphur, in the temperature rage of from 0° to 400°C, preferably from 20° to 300°C, in particular from 80° to 250°C.

16. A process according to one of Claims 13 to 15, **characterized in that** the sulphur-containing substances reacting with the acids present in the waste gas to give off sulphur, in particular sodium thiosulphate, are introduced in a ratio to the volatile heavy metals, preferably mercury, in a quantity of from 1 to 1000, preferably in a quantity of from 25 to 500.

17. A process for purifying acid-containing gases and waste gases from the volatile heavy metals contained therein, **characterized in that** the water-soluble, sulphur-containing substances reacting with the acids present in the waste gas to give off sulphur, are introduced in the temperature ranges according to Claim 15 and with the stoichiometric ratio according to Claims 16 [*sic*].

## Revendications

1. Produit pour débarrasser les gaz et les effluents gazeux d'acides et de métaux lourds, caractérisé en ce qu'il est constitué d'une poudre sèche à base d'hydroxyde de calcium réactif et de substances solubles dans l'eau et contenant du soufre, qui réagissent avec les acides présents dans l'effluent gazeux, avec dégagement de soufre.

2. Produit selon la revendication 1, caractérisé en ce que l'hydroxyde de calcium contient de 0,01 à 5, de préférence de 0,1 à 1 et en particulier de 0,2 à 0,6 % en poids de substances solubles dans l'eau et contenant du soufre, qui réagissent avec les acides présents dans l'effluent gazeux avec dégagement de soufre.

3. Produit selon la revendication 1 ou 2, caractérisé en ce qu'il a une granulométrie < 200 µm.

4. Produit selon l'une des revendications précédentes, caractérisé en ce que la poudre sèche à base d'hydroxyde de calcium réactif contient en outre des substances tensioactives.

5. Produit selon la revendication 4, caractérisé en ce que l'hydroxyde de calcium contient de 0,5 à 10 % en poids de substances tensioactives.

6. Produit selon la revendication 4 ou 5, caractérisé en ce que les substances solubles dans l'eau et contenant du soufre, qui réagissent avec les acides présents dans l'effluent gazeux, avec dégagement de soufre, sont appliquées sur les substances tensioactives.

7. Produit selon la revendication 4 ou 5, caractérisé en ce que les substances solubles dans l'eau et contenant du soufre, qui réagissent avec les acides présents dans l'effluent gazeux, avec dégagement de soufre, sont mélangées aux substances tensioactives.

8. Produit selon l'une des revendications précédentes, caractérisé en ce que les substances solubles dans l'eau et contenant du soufre, qui réagissent avec les acides présents dans l'effluent gazeux, avec dégagement de soufre, sont choisies parmi l'ensemble comprenant les polysulfures, les polythionates et les thiosulfates, en particulier sous forme des composés de métaux alcalins et alcalino-terreux.

9. Produit selon l'une des revendications précédentes, caractérisé en ce qu'il contient de 1 à 5 et de préférence de 0,5 à 3 % en poids d'eau.

10. Produit selon l'une des revendications 4 à 9, caractérisé en ce que les substances tensioactives sont choisies parmi l'ensemble comprenant le charbon actif, le coke de lignite au four Martin, l'alumine activée, le gel de silice et/ou le kieselguhr.

11. Procédé pour fabriquer des poudres sèches ou hydratées à base d'hydroxyde de calcium et de substances contenant du soufre et fixant les métaux lourds, ou de substances contenant du soufre et fixant les métaux lourds et de substances tensioactives, pour débarrasser les gaz et les effluents gazeux des m&étaux lourds et des acides selon l'une des revendications précédentes, caractérisé en ce que, avant extinction de la chaux vive, on ajoute à la chaux vive, et/ou, pendant l'extinction, on ajoute à l'eau d'extinction, et/ou, après l'extinction, on ajoute à l'hydroxyde de calcium, des substances solubles dans l'eau et contenant du soufre, qui réagissent avec les acides présents dans l'effluent gazeux avec dégagement de soufre, ou encore des substances tensioactives et des substances solubles dans l'eau et contenant du soufre, qui réagissent avec les acides présents dans l'effluent gazeux, avec dégagement de soufre.

12. Procédé selon la revendication 11, caractérisé en ce que les substances solubles dans l'eau et contenant du soufre, qui réagissent avec les acides présents dans l'effluent gazeux, avec dégagement de soufre, sont appliquées sur l'hydroxyde de calcium en étant dissoutes dans l'eau.

13. Procédé pour débarrasser les gaz et les effluents gazeux des métaux lourds et des acides, avec de l'hydroxyde de calcium et des substances contenant du soufre ou avec de l'hydroxyde de calcium, des substances contenant du soufre et des substances tensioactives, caractérisé en ce qu'on ajoute au courant de gaz ou d'effluent gazeux de l'hydroxyde de calcium sec et en poudre fine, ou encore de l'hydroxyde de calcium en poudre fine ayant une teneur en eau de 0,1 à 5 et de préférence de 0,5 à 3 % en poids, contenant des substances solubles dans l'eau et contenant du soufre, qui réagissent avec les acides présents dans l'effluent gazeux avec dégagement de soufre, ou encore de l'hydroxyde de calcium avec des substances tensioactives, sur lesquelles sont appliquées des substances solubles dans l'eau et contenant du soufre, qui réagissent avec les acides présents dans l'effluent gazeux, avec dégagement de soufre, et on sépare des courants de gaz et d'effluent gazeux, sur des dispositifs de séparation appropriés, de préférence des tissus filtrants, les métaux lourds sulfurés et les produits de la réaction des acides et du Ca(OH)₂.

14. Procédé selon la revendication 13, caractérisé en ce qu'on utilise les produits selon les revendications 1 à 10.

15. Procédé selon l'une des revendications 13 et 14, caractérisé en ce que les courants de gaz ou d'effluent gazeux contenant des substances contenant du soufre, qui réagissent avec les acides présents dans l'effluent gazeux avec dégagement de soufre, sont traités sur l'intervalle de températures de 0 à 400°C, de préférence de 20 à 300°C et en particulier de 80 à 250°C.

16. Procédé selon l'une des revendications 13 à 15, caractérisé en ce que les substances contenant du soufre, qui réagissent avec les acides présents dans l'effluent gazeux avec dégagement de soufre, en particulier le thiosulfate de sodium, sont utilisées en une quantité de 1 à 1000 et de préférence de 25 à 500 fois la quantité des métaux lourds volatils, de préférence le mercure.

17. Procédé pour débarrasser des gaz et effluents gazeux contenant des acides, des métaux lourds volatils qui y sont contenus, caractérisé en ce que les substances solubles dans l'eau et contenant du soufre, qui réagissent avec les acides présents dans l'effluent gazeux, avec dégagement de soufre, sont utilisées sur les intervalles de températures selon la revendication 15, et selon les proportions stoechiométriques selon la revendication 16.
